# EUROPÄISCHE PATENTSCHRIFT

(11) **EP 1 863 686 B1**
(45) Veröffentlichungstag und Bekanntmachung des Hinweises auf die Patenterteilung: **18.03.2015**
(21) Anmeldenummer: 06707810.5
(22) Anmeldetag: 24.01.2006
(51) Int. Cl.: B60S 1/08, B60S 1/18

(54) **SCHEIBENWISCHERANLAGE MIT ZWEI GEGENLÄUFIGEN WISCHERN UND ZWEI REVERSIERMOTOREN**
WINDSHIELD WIPER SYSTEM WITH TWO OPPOSITE WIPERS AND TWO REVERSING MOTORS
CIRCUIT D'ESSUIE-GLACE MUNI DE DEUX ESSUIE-GLACE A MOUVEMENT OPPOSE ET DE DEUX MOTEURS BIDIRECTIONNELS

(30) Priorität: 24.03.2005 DE 102005013591
(43) Veröffentlichungstag der Anmeldung: 12.12.2007
(73) Patentinhaber: ROBERT BOSCH GMBH, 70442 Stuttgart (DE)
(72) Erfinder: MAYER, Stephan, 77855 Achern (DE)
(86) Internationale Anmeldenummer: PCT/EP2006/050392
(87) Internationale Veröffentlichungsnummer: WO 2006/100136

(56) Entgegenhaltungen:
- EP-A- 0 855 317
- DE-A1- 1 405 997
- DE-A1- 1 455 969
- DE-A1- 3 644 428
- US-A- 4 723 101
- US-B1- 6 281 649

## Beschreibung

### Stand der Technik

Die Erfindung betrifft eine Scheibenwischeranlage mit zwei gegenläufigen Wischern und zwei synchronisierten Reversiermotoren, wobei die Wischer sich mit ihren Wischblättern in einer Parkposition mindestens teilweise überlappen und wobei jeder Reversiermotor über ein zugeordnetes Hebelgetriebe einen Wischer antreibt.

Eine derartige Wischeranlage ist beispielsweise aus der DE 103 06 496 A1 bekannt.

Zum Reinigen von Windschutzscheiben an Kraftfahrzeugen sind verschiedene Wischfeldtypen und Antriebsvorrichtungen bekannt. Bei den Wischfeldern unterscheidet man hauptsächlich Einhebelwischfelder und Zweihebelwischfelder. Bei den Zweihebelwischfeldern können die aus Wischarm und Wischblatt bestehenden Wischhebel im Gleichlauf oder im Gegenlauf angetrieben werden.

Die Antriebsvorrichtung besitzt bisher in der Regel auch für zwei Scheibenwischer nur einen Wischermotor, dessen rotierende Antriebsbewegung seiner Abtriebswelle über ein Kurbelgetriebe in eine oszillierende Schwenkbewegung der Antriebswellen der Scheibenwischer übersetzt wird. Neuere Wischermotoren sind mit einer Elektronik ausgestattet, die eine reversierende Antriebsbewegung der Abtriebswelle regeln. Die Elektronik ermöglicht ferner eine Wischwinkelsteuerung mit einer dynamischen, lastabhängigen Wischwinkelkorrektur und Wischgeschwindigkeitsregelung. Außerdem lässt die Elektronik verschiedene Wischfunktionen und Positionen zu, z. B. eine erweiterte Parkstellung.

Zum Wischen großer Windschutzscheiben kommen häufig Wischanlagen mit gegenläufigen Scheibenwischern zum Einsatz. Werden diese von einem Wischermotor angetrieben, ergibt sich neben einer großen Baugröße entsprechend der Fahrzeugbreite ein großer Bauraumbedarf in der Fahrzeugmitte. Ferner ist der kinematische Aufbau mit oder ohne Zwischenlager aufwändig und erfordert einen großen, leistungsstarken Wischermotor. Die vielen einzelnen mechanischen Komponenten verursachen große statische Wischwinkeltoleranzen, zu denen dynamische Wischwinkeltoleranzen hinzukommen, die durch Elastizitäten der mechanischen Komponenten sowie der Träger- und Befestigungselemente bedingt sind.

Um einen einfacheren kinematischen Aufbau und dadurch geringere Wischwinkeltoleranzen zu erreichen, werden Wischeranlagen mit zwei Wischermotoren verwendet, die im Bereich der Wischerlager angeordnet sind und somit keinen Bauraum im mittleren Bereich der Windschutzscheibe beanspruchen. Zum Antrieb werden zwei synchronisierte Wischermotoren mit einer elektrischen Kommunikation verwendet. Vorzugsweise werden beide Wischermotoren durch eine Steuerelektronik im Reversierbetrieb geregelt, um die damit verbundenen Vorteile zu erzielen. Dabei wird dem jeweiligen Motor, wenn der Wischer die obere Umkehrlage auf der Scheibe erreicht hat, ein von der Elektronik erzeugtes Reversiersignal zur Drehrichtungsumkehr zugeführt. Im übrigen umfasst der Wischerantrieb, wie beispielsweise in der DE 100 45 573 A1 beschrieben, eine auf die Abtriebswelle des jeweiligen Motors aufgesetzte Motorkurbel, die über ein Hebelgetriebe eine Schwinge pendelnd antreibt, die wiederum zum Antrieb eines Wischerarms oder eines Wischerarmgestänges geeignet ist. Diese Anordnung wird für Rundläufer- und Reversiermotoren verwendet, wobei das Hebelgetriebe an die Antriebsart angepasst werden muss.

Tatsächlich kommen bei Fahrzeugen mit Gegenlauf-Wischanlage auf Grund der Einbauverhältnisse und des Motormomentbedarfes immer häufiger Zweimotoren-Gegenlaufwischeranlagen zum Einsatz. Bei diesen Gegenlaufwischeranlagen kann es, bedingt durch die überlappende Anordnung der Wischhebel, bei einer Abweichung der Wischbewegungen der beiden Wischhebel von der Sollbewegung zur Kollision und dem Blockieren der Wischhebel auf dem Fahrzeug kommen. Die Abweichungen der Steuerkurven der Wischbewegungen von der theoretischen Sollkurve sind bedingt durch mechanische Fertigungstoleranzen und Reglerabweichungen der elektronisch gesteuerten Wischanlagen-Antriebs-module. Selbst bei ideal synchronisierten Motor-Abtriebswellen kann es also auf Grund der nachgeschalteten Mechanik zu Abweichungen kommen, die sich in zufällig verteilten mechanischen Phasenverschiebungen zwischen den Wischbewegungen der Wischer äußern.

Fällt die Summe der Phasenverschiebungen der Wischbewegungen zwischen dem FS- (Fahrerseite) und BS- (Beifahrerseite) Modul einer Zweimotorenwischanlage ungünstig aus, führt dies - bei unzureichendem minimalen Abstand der Wischhebel zueinander - zur Kollision. Der durch die toleranzbehafteten Steuerkurven notwendige größere Sicherheitsabstand der Wischerblätter zueinander bringt jedoch den Nachteil eines weniger harmonischen Wischerlaufs mit sich.

Aus der US-A-4723101 ist eine gattungsgemässe Wischanlage mit zwei Rundläufermotoren bekannt, bei der zur Lösung der Kollisionsproblematik ein Wischer später gestartet und anschließend mit höherer Drehzahl als der andere Wischer angetrieben wird.

Aus der DE-A-3644428 ist eine Wischanlage mit nur einem Rundläufermotor bekannt, bei der zur Kollisionsvermeidung unterschiedliche Winkelhebel in den beiden Hebelgetrieben vorgesehen sind, die eine Geschwindigkeitsdifferenz der Wischer erzeugen, wodurch der Ablauf der Wischbewegungen der Wischer relativ zueinander auseinander gespreizt wird.

Aus der EP-A-0855317 ist eine Wischanlage mit einem einzigen Rundläufermotor bekannt, wobei die beiden Motorkurbeln mit definierter Winkelabweichung zueinander montiert werden können, so dass eine entsprechende definierte Phasenverschiebung in der Wischbewegung erzeugt ist.

Es ist Aufgabe der Erfindung, eine Scheibenwischeranlage der eingangs genannten Art so zu gestalten, dass die durch Fertigungs- und Elektroniktoleranzen bedingte Kollisionsgefahr der Wischer verringert werden kann, ohne den Sicherheitsabstand der Wischhebel vergrößern zu müssen.

Diese Aufgabe wird erfindungsgemäß durch eine Scheibenwischeranlage gemäß Anspruch 1 gelöst. Vorteilhafte Ausgestaltungen sind in den Unteransprüchen gekennzeichnet.

Nach der Erfindung ist zwischen den Wischbewegungen der beiden reversierend angetriebenen Wischer eine definierte Phasenverschiebung über die den Reversiermotoren zugeordneten Hebelgetriebe erzeugt, die so gerichtet ist, dass der eine Wischer - relativ zum anderen Wischer - bei der ersten Wischrichtung voreilend und bei der zweiten Wischrichtung nacheilend ist. Der Erfindung liegt der Gedanke zu Grunde, dass sich eine mechanische Phasenverschiebung bei einem Reversiermotor völlig anders auswirkt als bei einem Rundläufermotor. Bei letzterem würde ein bei der ersten Wischrichtung voreilender oberer Wischer unerwünschterweise auch bei der zweiten Wischrichtung voreilen, was eine erhöhte Kollisionsgefahr bedeuten würde. Beim Revisionsmotor kommt es dagegen am oberen Umkehrpunkt des jeweiligen Wischers zu einer Phasenumkehr, so dass der zunächst voreilende obere Wischer bei der zweiten Wischrichtung automatisch nacheilend ist, wodurch die Kollisionsgefahr auch in der zweiten Wischzyklushälfte verringert ist. Auf den unteren Wischer bezogen bedeutet dieser Zusammenhang dementsprechend, dass der bei der ersten Wischrichtung relativ zum oberen Wischer nacheilende untere Wischer bei der zweiten Wischrichtung auf Grund der in den Umkehrpunkten erfolgenden Phasenumkehr voreilend ist. Insgesamt bewirkt die erfindungsgemäße gerichtete mechanische Phasenverschiebung insbesondere im kritischen Kollisionsbereich bei mittleren Wischwinkeln ein die Kollisionsgefahr minderndes Auseinanderspreizen des Ablaufs der Wischbewegungen der Wischer relativ zueinander.

Durch das erfindungsgemäße Vorhalten einer definierten und gerichteten Phasenverschiebung zwischen FS und BS Wischanlagen-Modul kann das Risiko einer Kollision der Wischer stark vermindert werden. Umgekehrt kann, ohne eine Kollision zu riskieren, bei einer erfindungsgemäß ausgelegten Phasenverschiebung der Minimalabstand der Wischerblätter trotz Toleranzen klein gehalten bzw. verringert werden, wodurch neben einer Harmonisierung des Wischerlaufs vorteilhafterweise die Wischeranlage weniger belastet und die maximale Stromaufnahme verringert wird. Ferner können auch elektronische Reglerabweichungen der Steuerkurve der Wischbewegungen vom Sollwert durch die erfindungsgemäße Phasenverschiebung vorgehalten bzw. hinsichtlich der Kollisionsgefahr entschärft werden. In vorteilhafter Weise kann mithilfe der Hebelgetriebe für den oberen Wischer eine positive Phasenverschiebung, die bei der ersten Wischrichtung mit einem Voreilen des oberen Wischers verknüpft ist, und für den unteren Wischer eine negative Phasenverschiebung, die bei der ersten Wischrichtung mit einem Nacheilen des unteren Wischers verknüpft ist, erzeugt sein.

Die erfindungsgemässe Scheibenwischeranlage sieht vor, dass mithilfe der Hebelgetriebe für den oberen Wischer eine mit einem Voreilen des oberen Wischers bei der ersten Wischrichtung verknüpfte positive Phasenverschiebung und gleichzeitig für den unteren Wischer eine mit einem Nacheilen des unteren Wischers bei der ersten Wischrichtung verknüpfte negative Phasenverschiebung erzeugt ist. Dadurch kann die Phasenverschiebung des jeweiligen einzelnen Wischers relativ klein gehalten werden. Günstig ist weiterhin, wenn der Absolutbetrag der Phasenverschiebung beim oberen und unteren Wischer jeweils etwa 3° Motorkurbelwinkel beträgt.

Erfindungsgemäss ist die Phasenverschiebung durch eine definierte Winkelabweichung der jeweiligen Motorkurbel der Hebelgetriebe erzeugt. Das wird dadurch erreicht, dass die Motorkurbel gelenkig mit einer Gelenkstange verbunden ist, die mit ihrem anderen Ende gelenkig mit einer den jeweiligen Wischer pendelnd antreibenden Lagerschwinge verbunden ist, und dass die Winkelabweichung durch die Abweichung der Motorkurbel von der idealen Deck- bzw. Strecklage bezüglich der Gelenkstange erzeugt ist. Die Übertragungsfunktion (Getriebefunktion) derartiger Getriebe mit ungleichförmiger Übersetzung bietet den Vorteil, dass zur Kollisionsgefahrverminderung ausreichende Phasenverschiebungen von einigen Grad, die durch das Vorhalten eines entsprechenden Motorkurbelwinkels realisiert werden, nur mit sehr geringen, vom Fahrer kaum wahrnehmbaren Änderungen des Wischwinkels des jeweiligen Wischers einhergehen.

Die erfindungsgemäß vorgehaltene Phasenverschiebung ruft zwar eine Abweichung des Wischwinkels vom Nennwischwinkel in der oberen Umkehrlage hervor, jedoch kann dies auf einfache Weise dadurch korrigiert werden, dass der durch die Phasenverschiebung vom Soll-Reversierwinkel abweichende Reversierwinkel des jeweiligen Wischers durch eine Rekalibrierung der elektrischen Steuerung des jeweiligen Revisiermotors so korrigiert wird, dass für den Wischer in der oberen Umkehrlage der Nennwischwinkel resultiert.

Vorteilhaft bei allen Varianten der erfindungsgemäßen Scheibenwischeranlage ist weiterhin, dass die Phasenverschiebung im Rahmen der Fertigung bei der Montage der jeweiligen Motorkurbel erzeugt ist, das heißt, es sind keine aufwändigen konstruktiven Änderungen erforderlich.

Im Einzelnen ist bei Zweimotorenwischanlagen mit mechanisch unterschiedlichen Modulen, welche nur in Linkslenkerausführung, bzw. Rechtslenker-Ausführung {insgesamt vier Wischerantrieb-Module) geliefert werden, die Phasenverschiebung einfach durch eine gezielte Gestängemontage realisierbar.

Die Erfindung wird nachfolgend an Ausführungsbeispielen anhand der Zeichnungen näher erläutert. Es zeigt
Figur 1 die schematische Darstellung einer erfindungsgemäßen Wischeranlage für Fahrzeug-Windschutzscheiben,
Figur 2 in Draufsicht ein als Getriebe für die erfindungsgemäße Wischanlage vorgesehenes Gestänge in einer Lage mit um +3° aufgekurbelter Motorkurbelposition (FS-Modul),
Figur 3 das Gestänge gemäß Figur 2, jedoch in der Decklage,
Figur 4 das Gestänge gemäß Figur 2 bzw. 3 in einer Lage mit um -3° aufgekurbelter Motorkurbelposition (BS-Modul),
Figur 5 zeigt ein Diagramm mit dem Verlauf der abhängig von Gestängetoleranzen möglichen Übertragungsfunktionen eines einzelnen Wischermoduls,
Figur 6 zeigt, in vergrößertem Maßstab, einen Ausschnitt des Diagramms gemäß Figur 5 im Bereich kleiner Motorkurbelwinkel,
Figur 7 zeigt, in vergrößertem Maßstab, einen Ausschnitt des Diagramms gemäß Figur 5 im hinsichtlich Wischerkollisionen kritischen, mittleren Motorkurbelwinkelbereich,
Figur 8 zeigt, in vergrößertem Maßstab, einen Ausschnitt des Diagramms gemäß Figur 5 im Bereich des Reversierwinkels.

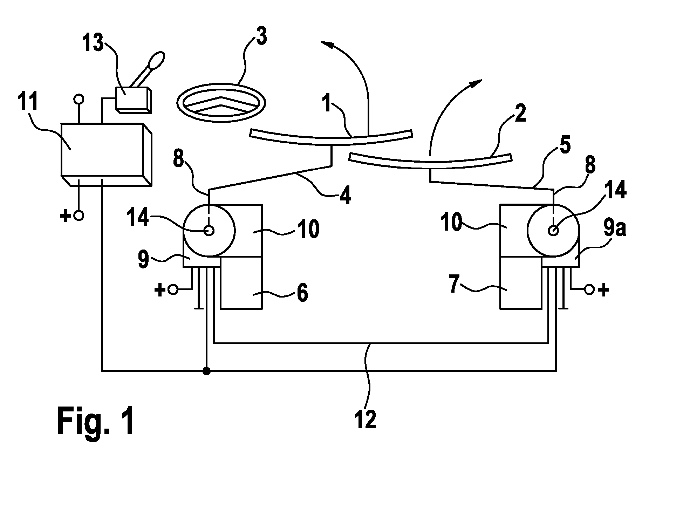

In Figur 1 ist schematisch eine bevorzugte Ausführungsform einer Scheibenwischeranlage mit zwei gegenläufigen Wischern dargestellt. Die Wischanlage weist einen oberen, fahrerseitigen (FS) Wischer, vgl. das Lenkrad-Symbol 3, und einen unteren, beifahrerseitigen (BS) Wischer auf. Der obere Wischer weist einen oberen Wischarm 4 und ein oberes Wischblatt 1, der untere Wischer einen unteren Wischarm 5 und ein unteres Wischblatt 2 auf. In der dargestellten Parkposition sind die Wischblätter 1 und 2 übereinander, also mindestens teilweise überlappend und mehr oder weniger parallel, im unteren Bereich der zu wischenden Scheibe angeordnet. In der ersten Hälfte eines Wischzyklus - beim Aufwärtswischen - bewegt sich das obere Wischblatt 1 ungefähr in einem Viertelkreis gegen den Uhrzeigersinn, während das gegenläufige untere Wischblatt 2 gleichzeitig (von eventuellen zeitlichen Phasenverschiebungen der beiden Wischer, die im Gegensatz zu der erfindungsgemäßen mechanischen Phasenverschiebung von der elektronischen Steuerung programmgemäß bzw. zur Regelung erzeugt werden, sehen wir hier und im Folgenden ab) eine Viertelkreisbewegung im Uhrzeigersinn ausführt, vgl. die entsprechenden Pfeile in Figur 1. Wenn die Wischblätter 1 und 2 ihre oberen Umkehrlagen erreicht haben, ändern sie ihre Bewegungsrichtung und erreichen, nach dem Abwärtswischen, am Ende des Wischzyklus ihre unteren Umkehrlagen. Die unteren Umkehrlagen können von der in Figur 1 gezeigten Parklage etwas abweichen. Darüber hinaus können in modernen Wischanlagen zusätzlich eine so genannte erweiterte Parklage und/oder weitere Funktions- bzw. Servicepositionen vorgesehen sein. Alternativ besteht aber auch die Möglichkeit, dass die Wischblätter in der Parkposition entlang der A-Säule des Fahrzeugs im Wesentlichen senkrecht ausgerichtet sind, so dass die erste Hälfte des Wischzyklus ein Abwärtswischen und die zweite Hälfte des Wischzyklus ein Aufwärtswischen ist.

Auf Grund der gegenläufigen, überlappenden Wischblätter 1 und 2 kommt es zu einem Überlappen der unteren Bereiche der von den Wischblättern 1 und 2 überstrichenen Wischfelder. Die Wischer müssen deshalb im Betrieb so synchronisiert werden, dass sie nicht miteinander kollidieren. Die Kollisionsgefahr ist offenbar im Bereich mittlerer Wischwinkel, also etwa in der Mitte zwischen den oberen und unteren Umkehrlagen, am größten. Bei modernen Zweimotorenwischanlagen erfolgt die Synchronisierung durch elektronische Ansteuerung der beiden Wischermotoren.

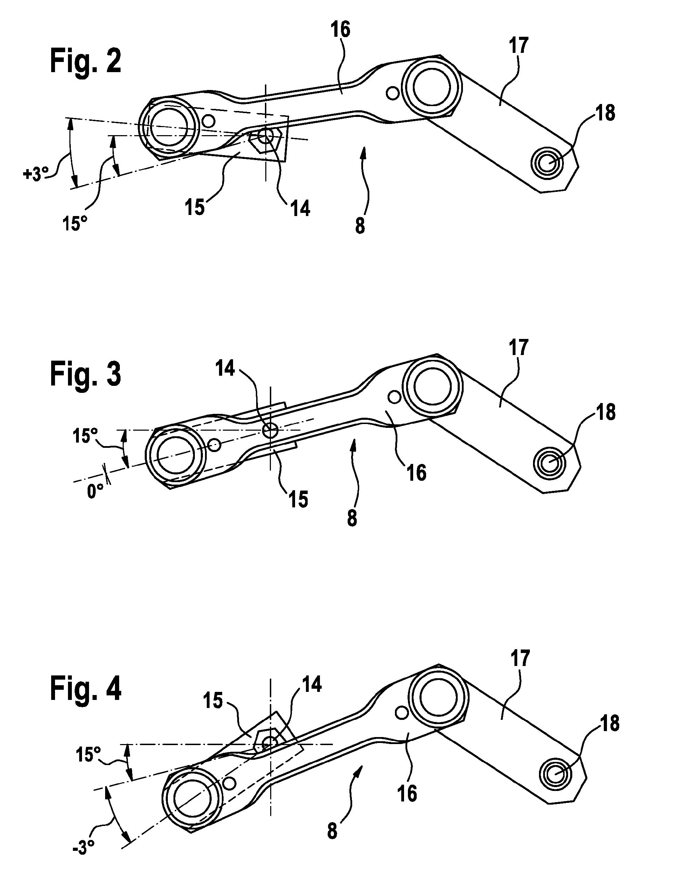

Bei der in Figur 1 gezeigten Zweimotorenwischanlage werden die beiden Wischer jeweils von einem Wischermodul, bestehend aus einem Reversiermotor 6 bzw. 7, einem in Figur 2 näher beschriebenen Getriebe 8 und einer elektronischen Steuerung 9 angetrieben. (In den Reversiermotoren 6 bzw. 7 kann jeweils noch ein internes Schneckengetriebe 10 integriert sein, das die Abtriebswelle 14 antreibt.) Die Steuerungen beider Wischermodule sind gemeinsam an ein Fahrzeug-Steuergerät 11 angeschlossen. Außerdem sind die Steuerungen 9 über eine serielle Schnittstelle 12 direkt miteinander verbunden. Die Wischanlage wird über einen am Fahrzeug-Steuergerät 11 angeschlossenen Wischerschalter 13 betrieben. Bei einem Linkslenker-Fahrzeug, wie es in Figur 1 durch das Lenkrad-Symbol 3 angedeutet ist, kann zur Synchronisierung, wie in der gattungsgemäßen DE 103 06 496 A1 näher beschrieben, typischerweise das fahrerseitige linke Wischermodul als Master-Modul mit einer Master-Steuerung 9 versehen sein, während das beifahrerseitige rechte Wischer-Modul als Slave-Modul mit einer Slave-Steuerung 9a ausgestaltet ist. Dabei sind die Wischkennlinien beider Scheibenwischer in der Steuerung 9 des Master-Moduls abgelegt. Mit dem Einschalten der Wischanlage durch den Wischerschalter 13 wird sodann das Master-Modul den oberen Wischer entsprechend seiner in der Steuerung 9 abgelegten Kennlinie ansteuern. Ferner wird das Slave-Modul von der Steuerung 9 des Master-Moduls angesteuert. Dabei sendet das Master-Modul in zyklischer Folge Positions-Sollwerte an das Slave-Modul und das Slave-Modul antwortet über die serielle Schnittstelle 12 jeweils mit seinen Positions-Istwerten.

Figur 2 zeigt ein als Getriebe 8 für das FS-Modul der erfindungsgemäßen Wischanlage vorgesehenes Gestänge, das in einer Lage mit um +3° aufgekurbelter Motorkurbelposition dargestellt ist. Dabei ist die Motorkurbel 15 einerseits starr mit der Motor-Abtriebswelle 14 und andererseits gelenkig mit einer Gelenkstange 16 verbunden, die mit ihrem anderen Ende gelenkig mit einer den jeweiligen Wischer pendelnd antreibenden Lagerschwinge 17 verbunden ist. Die Lagerschwinge 17 ist mit einer Antriebswelle 18 für den hier nicht näher dargestellten Wischhebel starr verbunden. Diese Anordnung bildet für eine durch einen Rundläufer-Wischermotor angetriebene Abtriebswelle 14 ein als so genannte Kurbelschwinge ausgebildetes Getriebe. Die um die Abtriebswelle 14 umlaufende Motorkurbel 15 führt zur pendelnden Bewegung der Lagerschwinge 17 um ca. 80° bis 90° vor und zurück, d. h. um den Wischwinkel, wobei das Getriebe nahe der Deck- und der Strecklage (der Motorkurbel 15 relativ zur Gelenkstange 16) mit wesentlich geringerer Ü-bersetzung als in den beiden dazwischenliegenden Motorkurbelwinkelbereichen arbeitet. Die Übertragungsfunktion des Getriebes, die die Abhängigkeit des durch die Bewegung der Lagerschwinge 17 gegebenen Wischwinkels vom Motorkurbelwinkel ausdrückt, flacht sich also an den Umkehrlagen stark ab. Dies gilt ähnlich auch für einen hier erfindungsgemäß verwendeten Reversiermotor, der in der oberen Umkehrlage des Wischers, die gegebenenfalls auch bei einem Reversierwinkel von weniger als 180° Motorkurbelwinkel festgelegt wird, ein Reversiersignal erhält und seine Drehrichtung umkehrt.

Wie in Figur 2 erkennbar, ist durch die Abweichung der Motorkurbel 15 von der in Figur 3 dargestellten idealen Decklage bezüglich der Gelenkstange 16 eine Winkelabweichung, das heißt eine Phasenverschiebung, von +3° erzeugt. Wenn die Motorkurbel 15 des FS-Wischermoduls in dieser aufgekurbelten Position montiert wird, startet der obere Wischer den Wischzyklus mit einem Phasenvorsprung von +3° Motorkurbelwinkel gegenüber dem unteren Wischer (sofern dieser selbst nicht phasenverschoben ist). Bei einem bestimmten Motorkurbelwinkel, dem Reversierwinkel, erfolgt die Drehrichtungs- und Phasenumkehr des Reversiermotors, so dass das Abwärtswischen mit einer Phasenverzögerung von -3° Motorkurbelwinkel erfolgt, solange, bis beim unteren Umkehrpunkt die nächste Phasenumkehr erfolgt. Der fahrerseitige, obere Wischer ist also beim Aufwärtswischen voreilend, beim Abwärtswischen aber nacheilend.

Figur 4 zeigt das Gestänge gemäß Figur 2 bzw. 3 mit einer um -3° aufgekurbelten Motorkurbelposition. Wenn die Motorkurbel 15 des BS-Moduls in dieser Position montiert wird, resultiert dort eine negative Phasenverschiebung von 3°, also ein Nacheilen beim Aufwärtswischen und, nach Phasenumkehr, ein Voreilen beim Abwärtswischen. Werden das FS und das BS-Modul beide, und zwar 'gegenphasig' montiert wie in den Figuren 2 und 4 dargestellt, so resultiert eine Gesamtphasenverschiebung der Wischer zueinander um 6° Motorkurbelwinkel.

Bedingt durch Fertigungstoleranzen der Antriebs-Module einer Zweimotorenwischanlage und die Reglerabweichungen der elektronisch gesteuerten Module von der theoretischen Sollkurve der Wischbewegungen für das Master- und Slave-Modul, besteht, wie eingangs beschrieben, bei unzureichendem minimalem Abstand der Wischhebel zueinander die Gefahr der Kollision der Wischhebel. Zur Kompensation dieser Fertigungstoleranzen von Wischarm, Wischhebel, Montage der Wischhebel beim Kunden und Abweichung der elektronischen Steuerwerte vom Nennwert bei Master und Slave ist bisher, zur Kollisionsvermeidung in allen Betriebszuständen, ein relativ großer und für jedes Fahrzeug spezifischer Minimalabstand (ca. 90-100 mm) der Wischhebel zueinander einzuhalten. Der notwendige große Minimalabstand der Wischerblätter 1 und 2 hat nun aber einen weniger harmonischen Wischerlauf zum Nachteil, welcher die Wischarme 4 und 5 und den Wischermotor 6 und 7 durch höhere Massenkräfte besonders in den Umkehrlagen höher belastet.

Erfindungsgemäß werden deshalb die derzeit durch Toleranzen zufällig auf Master (FS) und Slave (BS) verteilten Phasenverschiebungen so beeinflusst, dass das Master-Modul beim Aufwärtswischen voreilend und beim Abwärtswischen nacheilend ist. Für das Slave-Modul werden genau gegenphasige Verhältnisse implementiert.

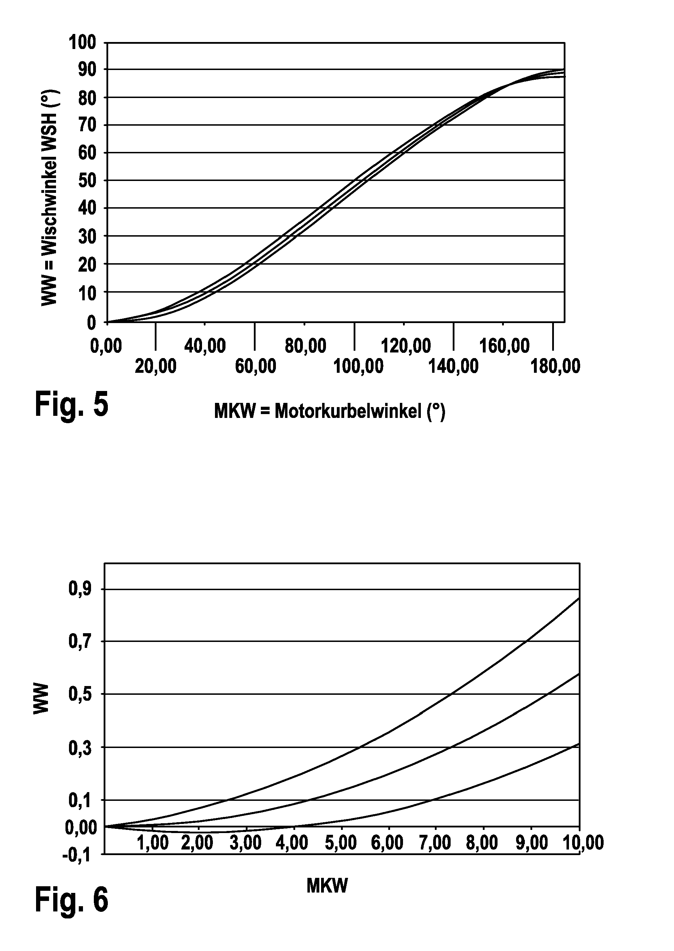

Figur 5 zeigt den Einfluss der Toleranzen der Bauteile / Montage auf die Übertragungsfunktion F(Mkw)=WW, wo Mkw den Motorkurbelwinkel und WW den Wischwinkel bedeuten. Dargestellt sind die möglichen Übertragungsfunktionen eines einzelnen Zweimotorenwischer-Moduls in Abhängigkeit von den variierten Gestängetoleranzen, das heißt den Toleranzen der Einzelbauteile bzw. der Montage. Die Untersuchung ergab, dass sich die Einzeltoleranzen in den jeweils ungünstigsten Fällen zur oberen bzw. unteren Grenzkurve addieren können. Dies bedeutet beispielsweise, dass bei 50° Mkw gemäß der oberen Grenzkurve bereits 2-3° WW-Voreilung gegenüber der Sollkurve (mittlere Kurve in Figur 5) vorliegen können, wobei 1° WW ungefähr 20 mm Außenkreis des jeweiligen Wischblatts äquivalent ist. Offensichtlich ist diese Situation hinsichtlich Kollisionsgefahr kritisch.

Der erfindungsgemäße Ansatz, Kollisionen zu vermeiden, besteht nun nicht darin, für beide Module einen möglichst nahen Verlauf der Übertragungsfunktionen nahe der Sollkurve anzustreben, da diese Eliminierung der Toleranzen einen sehr genauen, aufwändigen Abgleich der mechanischen und elektronischen Bauteile erfordern würde. Wesentlich einfacher ist es, wie oben beschrieben, gezielt für die FS-Seite (oberer Wischer) eine voreilende, für die BS-Seite eine nacheilende Übertragungsfunktion zur Sollkurve zu erzeugen.

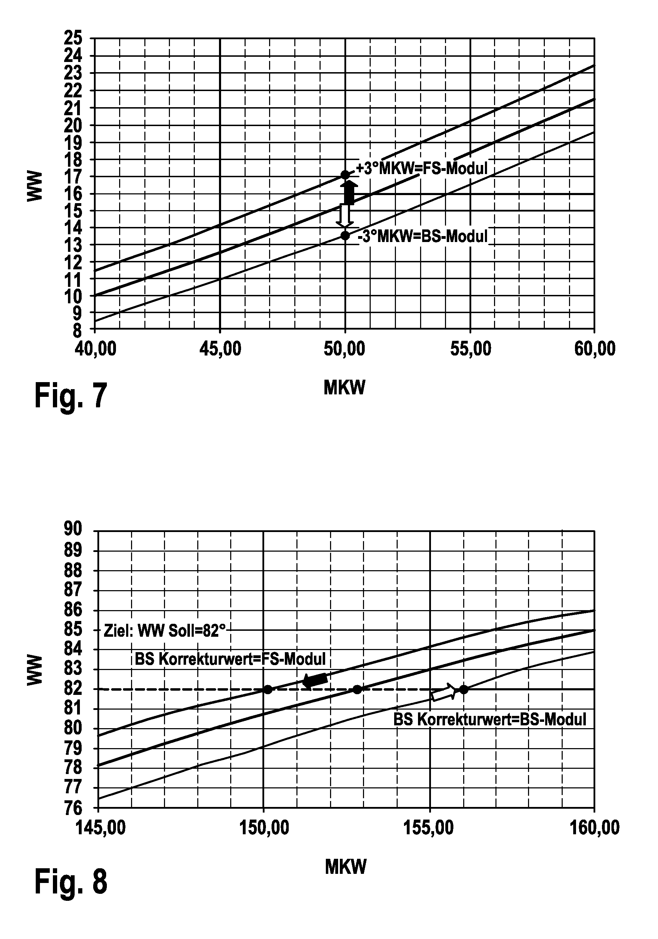

Bei genauer Betrachtung der toleranzbehafteten Übertragungsfunktionen zeigt sich, dass der Einfluß der Bauteiltoleranzen Motorkurbel 15, Lagerschwinge 17, Gelenkstange 16 im kritischen Kollisionsbereich von 30-80° Mkw gering ist. Die wesentliche Einflußgröße in diesem Bereich auf die Phasenverschiebung wird durch die Montageabweichung der Motorkurbel 15 zu der idealen Deck- bzw. Strecklage, vgl. Figuren 2 bis 4, hervorgerufen. Gemäß der Erfindung erzeugt diese bewusste und gerichtete Montageabweichung im Wesentlichen ein vor- bzw. nacheilendes Getriebe, wie zuvor bei Figur 2 bis 4 beschrieben und wie in Figur 7 nochmals schematisch in Form einer Verschiebung der Übertragungsfunktion für FS in die obere und für BS in die untere Grenzkurve dargestellt. Die bewusste Variation der Montagetoleranz der Motorkurbel 15 ist zwar selbst auch wieder toleranzbehaftet, es ändert sich jedoch nichts am gewünschten Effekt des Auseinanderspreizens der entsprechenden oberen und unteren Kurvenschar.

Aus Figur 6 geht hervor, dass ein Gestänge, welches eine positive (+3°) oder negative (-3°) Abweichung der Montage der Motorkurbel 15 von der idealen Deck/Strecklage aufweist, auf die Position der Wischhebel in der Parklage einen am Fahrzeug nicht nachmessbaren Einfluss hat, da um die Deck/Strecklage herum die Übersetzung des Getriebes nahe unendlich ist. Bewegungen der Motorkurbel 15 in diesem Größenbereich werden daher auch bei vollständig am Fahrzeug montierten Wischanlagen-Systemen vom Fahrer nicht wahrgenommen, da, wie in Figur 6 erkennbar, die in den Grenzkurven implementierten Phasenverschiebungen nur mit Änderungen von Bruchteilen eines Grades im WW verknüpft sind.

Die Abweichung der Motorkurbel 15 von der Deck/Strecklage ruft bei Reversierantrieben eine Abweichung des WW in der oberen Wendelage hervor. Diese Abweichung kann, wie in Figur 8 dargestellt, durch eine Korrektur des Reversierwinkels um die bewusst erzeugte Phasenverschiebung korrigiert werden, z. B.: Soll-Reversierwinkel FS (82° WW) = 152,8° Mkw führt zu: Soll-Reversierwinkel FS + Phase (82° WW) = 150,0° Mkw.

Dies kann auf einfache Weise durch eine einmalige elektronische Rekalibrierung am Bandende durchgeführt werden.

## Patentansprüche

1. Scheibenwischeranlage mit zwei gegenläufigen Wischern (1, 2, 4, 5) und zwei synchronisierten Reversiermotoren (6, 7), wobei die beiden Wischer (1, 2, 4, 5) sich mit ihren Wischblättern (1, 2) in einer Parkposition mindestens teilweise überlappen und wobei jeder Reversiermotor (6, 7) über ein zugeordnetes Umsatzgetriebe (8) einen Wischer (1, 2, 4, 5) antreibt,
**dadurch gekennzeichnet,**
**dass** die den Reversiermotoren (6, 7) zugeordneten Hebelgetriebe (8) durch eine definierte Winkelabweichung zwischen den jeweils fest mit den Antriebswellen (14) der Reversiermotoren (6, 7) verbundenen Motorkurbeln (15) der Hebelgetriebe (8) so zueinander eingestellt sind, dass eine definierte Phasenverschiebung zwischen den Wischbewegungen der beiden Wischer (1, 2, 4, 5) erzeugt wird, die so gerichtet ist, dass der eine obere Wischer relativ zum anderen unteren Wischer bei der ersten Wischrichtung voreilend und bei der zweiten Wischrichtung nacheilend ist,
wobei jede Motorkurbel (15) gelenkig mit einer Gelenkstange (16) verbunden ist, die mit ihrem anderen Ende gelenkig mit einer den jeweiligen Wischer (1, 2, 4, 5) pendelnd antreibenden Lagerschwinge (17) verbunden ist, wobei die Winkelabweichung durch die gegenphasige Abweichung der Motorkurbeln (15) von der idealen Deck- bzw. Strecklage bezüglich der jeweiligen Gelenkstange (16) erzeugt ist.

2. Scheibenwischeranlage nach Anspruch 1, **dadurch gekennzeichnet, dass** mithilfe der Hebelgetriebe (8) für den vorauseilenden oberen Wischer eine positive Phasenverschiebung und gleichzeitig für den nacheilenden unteren Wischer eine negative Phasenverschiebung erzeugt ist.

3. Scheibenwischeranlage nach einem der Ansprüche 1 bis 2, **dadurch gekennzeichnet, dass** der Absolutbetrag der Phasenverschiebung jedes Wischers etwa 3° beträgt.

4. Scheibenwischeranlage nach einem der Ansprüche 1 bis 3, **dadurch gekennzeichnet, dass** die Phasenverschiebung im Rahmen der Fertigung bei der Montage der jeweiligen Motorkurbel (15) erzeugt wird.

5. Scheibenwischeranlage nach einem der Ansprüche 1 bis 4, **dadurch gekennzeichnet, dass** der durch die Phasenverschiebung vom Soll-Reversierwinkel abweichende Reversierwinkel des jeweiligen Wischers (1, 2, 4, 5) durch eine Rekalibrierung einer elektrischen Steuerung (9, 9a) des jeweiligen Revisiermotors (6, 7) so korrigiert wird, dass für den Wischer in der oberen Umkehrlage der Nennwischwinkel resultiert.

## Claims

1. Windscreen wiper system with two wipers (1, 2, 4, 5) which move in opposing directions and two synchronized reversing motors (6, 7), wherein the two wipers (1, 2, 4, 5) at least partially overlap with their wiper blades (1, 2) in a parked position, and wherein each reversing motor (6, 7) drives a wiper (1, 2, 4, 5) via an assigned conversion gearing (8),
**characterized**
**in that** the lever mechanisms (8) which are assigned to the reversing motors (6, 7) are adjusted with respect to one another by means of a defined angular difference between the motor cranks (15), respectively connected in a fixed fashion to the drive shafts (14) of the reversing motors (6, 7), of the lever mechanisms (8) in such a way that a defined phase shift is produced between the wiping movements of the two wipers (1, 2, 4, 5), which phase shift is directed such that the one upper wiper leads relative to the other lower wiper in the first wiping direction, and trails in the second wiping direction, wherein each motor crank (15) is connected in an articulated fashion to a link arm (16) which is connected at its other end in an articulated fashion to a bearing rocker (17) which drives the respective wiper (1, 2, 4, 5) in an oscillating fashion, wherein the angle difference is produced as a result of the anti-phase difference between the motor cranks (15) and the ideal covering position or extension position in relation to the respective link arm (16).

2. Windscreen wiper system according to Claim 1, **characterized in that** by means of the lever mechanisms (8) a positive phase shift is produced for the leading upper wiper and at the same time a negative phase shift is produced for the trailing lower wiper.

3. Windscreen wiper system according to one of Claims 1 to 2, **characterized in that** the absolute value of the phase shift of each wiper is approximately 3°.

4. Windscreen wiper system according to one of Claims 1 to 3, **characterized in that** the phase shift is produced in the scope of the fabrication during the mounting of the respective motor crank (15).

5. Windscreen wiper system according to one of Claims 1 to 4,
**characterized in that** the reversing angle, which differs from the setpoint reversing angle as a result of the phase shift, of the respective wiper (1, 2, 4, 5) is corrected by a recalibration of an electrical controller (9, 9a) of the respective reversing motor (6, 7) in such a way that the rated wiping angle results for the wiper in the upper reversal position.

## Revendications

1. Système d'essuie-glace comprenant deux essuie-glaces (1, 2, 4, 5) à mouvement opposé et deux moteurs bidirectionnels synchronisés (6, 7), les balais (1, 2) des deux essuie-glaces (1, 2, 4, 5) se chevauchant au moins partiellement dans une position de repos, et chaque moteur bidirectionnel (6, 7) entraînant un essuie-glace (1, 2, 4, 5) par le biais d'un mécanisme de transformation associé (8),
**caractérisé en ce que**
les mécanismes à leviers (8) associés aux moteurs bidirectionnels (6, 7) sont réglés l'un par rapport à l'autre par un écart angulaire défini entre les manivelles de moteur (15) des mécanismes à leviers (8) reliées respectivement fixement aux arbres d'entraînement (14) des moteurs bidirectionnels (6, 7), de telle sorte qu'un déphasage défini entre les mouvements de balayage des deux essuie-glaces (1, 2, 4, 5) soit produit, lequel déphasage est orienté de telle sorte que l'essuie-glace supérieur soit en avance sur l'autre essuie-glace inférieur dans le premier sens de balayage et soit en retard dans le deuxième sens de balayage, chaque manivelle de moteur (15) étant reliée de manière articulée à une tige articulée (16) qui est reliée, par son autre extrémité, de manière articulée à une bielle oscillante de palier (17) entraînant de manière oscillante l'essuie-glace respectif (1, 2, 4, 5), l'écart angulaire étant produit par l'écart en opposition de phase des manivelles de moteur (15) vis-à-vis de la position idéale de recouvrement ou d'extension par rapport à la tige articulée respective (16).

2. Système d'essuie-glace selon la revendication 1, **caractérisé en ce qu'**à l'aide des mécanismes à levier (8), un déphasage positif est produit pour l'essuie-glace supérieur en avance et, simultanément, un déphasage négatif est produit pour l'essuie-glace inférieur en retard.

3. Système d'essuie-glace selon l'une quelconque des revendications 1 et 2, **caractérisé en ce que** la valeur absolue du déphasage de chaque essuie-glace vaut approximativement 3°.

4. Système d'essuie-glace selon l'une quelconque des revendications 1 à 3, **caractérisé en ce que** le déphasage est produit dans le cadre de la fabrication pendant le montage de la manivelle de moteur respective (15).

5. Système d'essuie-glace selon l'une quelconque des revendications 1 à 4, **caractérisé en ce que** l'angle d'inversion de l'essuie-glace respectif (1, 2, 4, 5) différant de l'angle d'inversion de consigne du fait du déphasage angulaire est corrigé par une recalibration d'une commande électrique (9, 9a) du moteur bidirectionnel respectif (6, 7), de telle sorte qu'il en résulte l'angle de balayage nominal pour l'essuie-glace dans la position d'inversion supérieure.
